# EUROPÄISCHE PATENTSCHRIFT

(11) **EP 1 445 575 B1**
(45) Veröffentlichungstag und Bekanntmachung des Hinweises auf die Patenterteilung: **30.01.2013**
(21) Anmeldenummer: 03024230.9
(22) Anmeldetag: 22.10.2003
(51) Int. Cl.: G01B 5/012, G01B 21/04

(54) **Verfahren und Anordnung zur Auswertung von Sendesignalen eines Tastsystems**
Method and apparatus for evaluating the transmission signals of a touch probe system
Procédé et dispositif pour évaluer les signaux d'émission d'un système palpeur

(30) Priorität: 29.01.2003 DE 10304193
(43) Veröffentlichungstag der Anmeldung: 11.08.2004
(73) Patentinhaber: Dr. Johannes Heidenhain GmbH, 83292 Traunreut (DE)
(72) Erfinder: Gröll, Klaus, 83329 Waging am See (DE); Eisenberger, Christian, 83324 Ruhpolding (DE)

(56) Entgegenhaltungen:
- EP-A- 1 014 582
- WO-A-00/70298
- WO-A-99/41856
- DE-A- 10 132 554
- US-A- 5 862 604
- US-B1- 6 487 785

## Beschreibung

Die Erfindung betrifft ein Verfahren zur Auswertung von Sendesignalen eines Tastsystems nach dem Oberbegriff des Patentanspruchs 1 sowie eine Anordnung hierfür nach dem Oberbegriff des Patentanspruchs 23.

Hierbei geht es um die Auswertung der Sendesignale (Ausgangssignale) eines Tastsystems, das an einem Messtaster ein aus einer Ruheposition auslenkbares Tastelement aufweist und das während einer Auslenkung des Tastelementes aus seiner Ruheposition heraus ein Schaltsignal erzeugt. Derartige Tastsysteme werden zur Positionsbestimmung von Werkstücken verwendet, die in materialbearbeitenden Maschinen, z.B. Fräsmaschinen, eingespannt sind. Unter der Ruheposition des Tastelementes wird eine Position des Tastelementes verstanden, in der es keinen Kontakt mit einem Werkstück hat. Bei Kontakt des Tastelementes mit dem Werkstück wird das Tastelement aus seiner Ruheposition heraus ausgelenkt.

Zur Ermittlung, ob das Tastelement aus seiner Ruheposition heraus ausgelenkt wurde, wird eine geeignete Detektoranordnung verwendet und in Abhängigkeit von den seitens dieser Detektoranordnung erzeugten Signalen, gibt das Tastsystem seine Sendesignale ab, vergleiche DE 101 32 554 A1.

Bei sogenannten kabellosen Tastsystemen wird das entsprechende Schaltsignal als elektromagnetisches Signal, insbesondere als Infrarotsignal, an eine Empfangseinheit übertragen. In dieser werden die Sendesignale des Tastsystems ausgewertet, um das Auftreten von Schaltsignalen (also eine Auslenkung des Tastelementes) festzustellen. Um hierbei das Schaltsignal (und gegebenenfalls weitere relevante Sendesignale des Tastsystems, wie z. B. ein Batteriesignal) von Störsignalen (verursacht z. B. durch den Infrarot-Anteil gedimmter Neon-Leuchtröhren) unterscheiden zu können, werden die von der Empfangseinheit empfangenen Signale (Empfangssignale) mit einem Referenzsignal verglichen und nur solche Signale weiter verarbeitet, die eine durch das Referenzsignal bestimmte Signalschwelle überschreiten. Ein derartiges Verfahren und eine zugehörige Schaltungsanordnung sind aus der WO 99/41856 A1 bekannt.

US 5 862 604 offenbart ein bekanntes Koordinatenmessgerät.

Die Unterscheidung zwischen auswertungsrelevanten Sendesignalen des Tastsystems und Störsignalen wird dabei zunehmend dadurch erschwert, dass ein Datenaustausch zwischen dem Tastsystem und der zugehörigen Empfangseinheit über immer größere Entfernungen verlangt wird und hiermit häufig noch eine entsprechende Vergrößerung des Raumwinkels einhergeht, in dem die Sendesignale abgestrahlt werden.

Der Erfindung liegt das Problem zugrunde, ein Verfahren und eine Anordnung der eingangs genannten Art zu schaffen, die sich durch eine verbesserte Unterscheidung zwischen Sendesignalen des Tastsystems und Störsignalen auszeichnen.

Dieses Problem wird hinsichtlich des Verfahrens durch die Merkmale des Patentanspruchs 1 gelöst.

Danach werden die Empfangssignale des Tastsystems (in der Empfangseinheit) vor dem Vergleich mit dem Referenzsignal in einem Differenzierer nach der Zeit differenziert.

Durch das Differenzieren der Empfangssignale werden niederfrequente Störungen eliminiert, die z. B. in mittels Neon-Leuchtröhren beleuchteten Räumen auftreten, und hierdurch die Unempfindlichkeit des Auswerteverfahrens gegenüber Störungen erheblich verbessert.

Darüber hinaus eröffnet das Differenzieren der Empfangssignale die Möglichkeit zur Unterscheidung der Sendesignale von Störsignalen anhand der Lage der Flanken der Empfangssignale. Dies wird weiter unten noch näher erläutert werden.

Die Sendesignale des Tastsystems, insbesondere die Schaltsignale, werden vorzugsweise durch im Wesentlichen rechteckförmige Signalpulse gebildet, wobei das Differenzieren der Empfangssignale mit dem Ziel der Ermittlung der Signalflanken der Signalpulse durchgeführt wird und wobei sowohl die Signalflanken mit positiver Steigung als auch die Signalflanken mit negativer Steigung nachfolgend ausgewertet werden.

In einer bevorzugten Ausführungsform der Erfindung werden die Sendesignale durch eine Folge von Signalpaketen gebildet, wobei jedes Signalpaket ein Startsignal und ein Stoppsignal aufweist und wobei während jeder Auslenkung des Tastelementes aus seiner Ruheposition zwischen dem Start- und dem Stoppsignal ein Schaltsignal auftritt.

Durch Bestimmung der zeitlichen Lage der steigenden und fallenden Signalflanken der Start- und Stoppsignale, die vorgegebene, charakteristische Abstände aufweisen, kann das regelmäßige Auftreten von Start- und Stoppsignalen festgestellt werden. Dies erlaubt eine zuverlässige Unterscheidung der von Start- und Stoppsignalen begrenzten Signalpakete von Störsignalen, die keine vergleichbare Regelmäßigkeit aufweisen. Indem das bei jeder Auslenkung des Tastelementes abzugebende Schaltsignal wiederum an definierter Position zwischen einem Start- und einem Stoppsignal ausgesandt wird, lassen sich auch die Schaltsignale jeweils eindeutig anhand der Lage ihrer Flanken bezüglich der Start- und Stoppsignale identifizieren. Gleiches gilt für Batteriesignale oder sonstige relevante Sendesignale des Tastsystems. Dies ermöglicht eine weiter verbesserte Unterscheidung auswertungsrelevanter Sendesignale des Tastsystems von störenden Hintergrundsignalen.

Die elektromagnetischen Sendesignale (Infrarotsignale) des Tastsystems sowie die entsprechenden Störsignale (also die Empfangssignale) werden in der zugeordneten Empfangseinheit vor dem Differenzieren mittels eines optoelektronischen Elementes, z. B. in Form einer Fotodiode, in elektrische Signale (Spannungssignale) umgesetzt, so dass die Signalverarbeitung und -auswertung in der Empfangseinheit anhand der elektrischen Signale erfolgt.

Das Referenzsignal, welches insbesondere einer Referenzspannung entspricht und welches die Signalschwellen definiert, anhand derer Sendesignale des Tastsystems identifizierbar sind, wird vorzugsweise aus den (in elektrische Signale umgewandelten) differenzierten Empfangssignalen selbst gebildet, indem aus den differenzierten Empfangssignalen generierte Nutzsignale mit den Störsignalen verknüpft werden. Die Nutzsignale werden dabei derart erzeugt, dass sie im wesentlichen nur die Spitzenwerte derjenigen Anteile der differenzierten Empfangsignale umfassen, die auf die Sendesignale zurückgehen. Die Verknüpfung zwischen den Nutzsignalen und den Störsignalen zur Bildung eines Referenzsignals kann insbesondere durch Mittelwertbildung erfolgen, z. B. unter Verwendung eines elektrischen Spannungsteilers.

Sowohl für die Nutzsignale als auch aus den Störsignalen kann vor deren Verknüpfung jeweils ein effektiver Wert, z. B. entsprechend einer Einhüllenden des jeweiligen Signals, gebildet werden, insbesondere durch Verwendung jeweils einer Kondensatorschaltung, wobei die Nutzsignale vorzugsweise mittels der zur Bildung des effektiven Wertes verwendeten Kondensatorschaltung aus den Empfangssignalen generiert werden.

Im Ergebnis erfolgt (z.B. mittels zweier Kondensatorschaltungen), anhand der unterschiedlichen typischen Frequenzen der (höherfrequenten) Sendesignale einerseits und der (niederfrequenteren) Störsignale andererseits, eine Auftrennung der differenzierten Empfangssignale in Nutzsignale, die im wesentlichen die differenzierten Sendesignale umfassen, und in die vergleichsweise niederfrequenteren Störsignale. Dabei können gleichzeitig ein effektiver Wert der Nutzsignale (entsprechend den Spitzen der differenzierten Empfangssignale) und der Störsignale (entsprechend einer Einhüllenden der Störsignale) gebildet werden.

Alternativ zur Verwendung analoger Schaltungen (elektrischer Spannungsteiler, Kondensatorschaltung) kann zur Bildung des Referenzsignals auch eine digitale Schaltung, insbesondere unter Verwendung eines programmierbaren Logikbausteines oder eines Mikroprozessors, verwendet werden.

Zur Auswertung der Empfangssignale, die nach dem Vergleich mit dem Referenzsignal als auswertungsrelevant angesehen werden, kann ein schneller Halbleiterspeicher in Form eines Schieberegisters verwendet werden, der das Empfangssignal an einer Vielzahl Abtaststellen auswertet, um die Lage der Flanken der relevanten (das Sendesignal bildenden) Signalpulse zu ermitteln. Die Lage der Abtaststellen wird dabei durch ein periodisches Abtastsignal definiert, dessen Frequenz um ein Vielfaches größer ist als die Signalrate der Pulse des Sendesignals. Hierdurch kann die Lage der Flanken mit entsprechender Genauigkeit festgestellt werden.

Alternativ zu der Verwendung eines Schieberegisters können auch ein programmierbarer Logikbaustein oder ein Mikroprozessor verwendet werden, um im Rahmen einer digitalen Schaltung die Flanken des Empfangssignals zu ermitteln.

Zusammenfassend kann bei dem erfindungsgemäßen Verfahren aus dem regelmäßigen Auftreten von Start- und Stoppsignalen, die anhand der charakteristischen Lage ihrer Signalflanken zueinander identifizierbar sind, auf die Bereitschaft des Tastsystems geschlossen werden, wenn dieses im Bereitschaftszustand regelmäßig entsprechende Signalpakete aussendet. Wenn zudem die bei jeder Auslenkung des Tastelementes erzeugten Schaltsignale jeweils in definiertem Abstand zwischen einem Start- und einem Stoppsignal ausgesandt werden, dann sind auch diese Signale anhand der charakteristischen Lage ihrer Flanken innerhalb eines Signalpaketes zuverlässig identifizierbar. Gleiches gilt für eventuell auszusendende Batteriesignale, mit denen beispielsweise auf das Erfordernis hingewiesen wird, die Batterie des Tastsystems zu erneuern.

Eine besondere Zuverlässigkeit des Verfahrens wird erreicht, wenn nach dem Differenzieren der Empfangssignale die Signalflanken mit positiver und negativer Steigung jeweils in einer separaten Schaltung bearbeitet und ausgewertet werden.

Eine Anordnung zur Auswertung der Sendesignale eines Tastsystems, die insbesondere zur Durchführung des erfindungsgemäßen Verfahrens geeignet ist, ist durch die Merkmale des Patentanspruchs 23 charakterisiert.

Vorteilhafte Weiterbildungen der Anordnung sind in den von Patentanspruch 24 abhängigen Ansprüchen angegeben. Hinsichtlich der Vorteile dieser Anordnung wird auf die entsprechenden Ausführungen zu dem erfindungsgemäßen Verfahren hingewiesen.

Weitere Merkmale und Vorteile der Erfindung werden bei der nachfolgenden Erläuterung von Ausführungsbeispielen anhand der Figuren deutlich werden.

Es zeigen:
- Fig. 1: eine schematische Darstellung eines Tastsystems mit einer zugeordneten Empfangseinheit zur Auswertung der von dem Tastsystem erzeugten Sendesignale;
- Fig. 2: ein Blockschaltbild des Tastsystems aus Figur 1;
- Figuren 3a und 3b: eine schematische Darstellung der von dem Tastsystem erzeugten Sendesignale;
- Fig. 4: ein Blockschaltbild der Empfangseinheit aus Figur 1;
- Fig. 4a: eine schematische Darstellung der Wirkungsweise eines Differenzierelementes der in Figur 4 dargestellten Schaltungsanordnung;
- Fig. 5: einen Arbeitsschritt bei der Auswertung der Sendesignale des Tastsystems in der Empfangseinheit;
- Figuren 6a und 6b: einen weiteren Arbeitsschritt bei der Auswertung der Sendesignale des Tastsystems in der Empfangseinheit;
- Fig. 7: eine digitale Schaltung als Alternative zur analogen Schaltungsanordnung aus Figur 4.

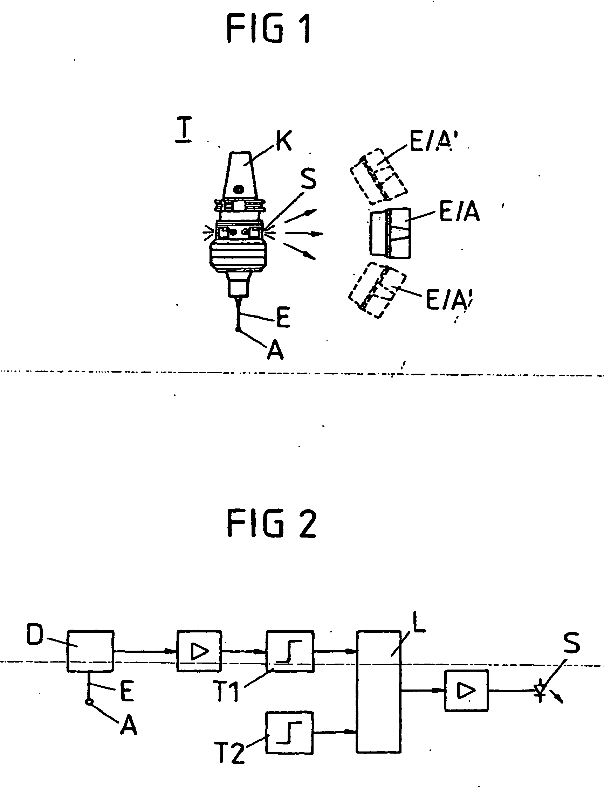

In Figur 1 ist ein Tastsystem T dargestellt, das zur Bestimmung der Position und Kontur eines in einer Werkzeugmaschine, beispielsweise einer Fräsmaschine, eingespannten Werkstückes dient und hierzu einen Messtaster umfasst. Der Messtaster ist mittels eine Konus K in eine Spindel der entsprechenden Werkzeugmaschine einsetzbar.

An seinem dem Konus K gegenüber liegenden Ende weist das Tastsystem T ein Tastelement E in Form eines Taststiftes mit einer Antastkugel A auf, das in alle Richtungen beweglich am Gehäuse des Tastsystems gelagert ist. Die Ruheposition des Tastelementes E liegt in der Regel auf der Symmetrieachse des Tastsystems T, wie in Figur 1 gezeigt. Bei einem Kontakt der Antastkugel A des Tastelementes E mit einem in der entsprechenden Werkzeugmaschine eingespannten Werkstück wird das Tastelement E aus seiner Ruheposition heraus ausgelenkt. Diese Auslenkung wird durch eine Detektoranordnung des Tastsystems erfasst.

Das Tastsystem weist hierzu gemäß Figur 2 eine dem Tastelement E zugeordnete Detektoranordnung D auf, mit der eine Auslenkung des Tastelementes E beispielsweise durch einen optischen Sender (in Form einer LED) und einem zugeordneten Sensor (in Form eines Differentialfotoelementes) erfassbar ist. Für weitere Einzelheiten hinsichtlich des möglichen Aufbaus des Tastsystems T wird beispielhaft auf die DE 199 29 557 A1 verwiesen.

Die von der Detektoranordnung D in Abhängigkeit von der Auslenkung des Tastelementes E erzeugte Ausgangsspannung wird verstärkt und einem Trigger T1 zugeführt. Der Trigger T1 enthält als weiteres Eingangssignal eine Referenzspannung, die beispielsweise von einem programmierbaren Logikbaustein L zur Verfügung gestellt wird. Die Referenzspannung definiert die Schaltschwelle, oberhalb derer die Ausgangsspannung des der Detektoranordnung D nachgeschalteten Verstärkers als Hinweis auf eine Auslenkung des Tastelementes E gilt.

Beim Auftreten einer Spannung oberhalb der Schaltschwelle wird mittels des Logikbausteines L über einen hierfür vorgesehenen IR-Sender S von dem Tastsystem ein entsprechendes Infrarot-Signal (Schaltsignal) an eine zugeordnete Empfangs- und Auswerteeinheit E/A gesandt, vergleiche Figur 1. Ein zweiter, dem Logikbaustein L des Tastsystems zugeordneter Trigger T2 dient der Überwachung der Batteriespannung und sorgt für die Abgabe eines Batteriesignals an die zugeordnete Empfangs- und Auswerteeinheit E/A, wenn im Tastsystem ein Batteriewechsel erforderlich ist.

Figur 1 zeigt unterschiedliche mögliche Anordnungen der Empfangs- und Auswerteeinheit E/A bezüglich des Messtasters des Tastsystems T, insbesondere bezüglich dessen IR-Sender S. Die möglichen Abstrahlwinkel des durch gleichmäßig am Umfang des Gehäuses des Tastsystems T angeordnete LEDs gebildeten Senders S betragen gemäß Figur 1 wahlweise 0°, +30° oder -30°.

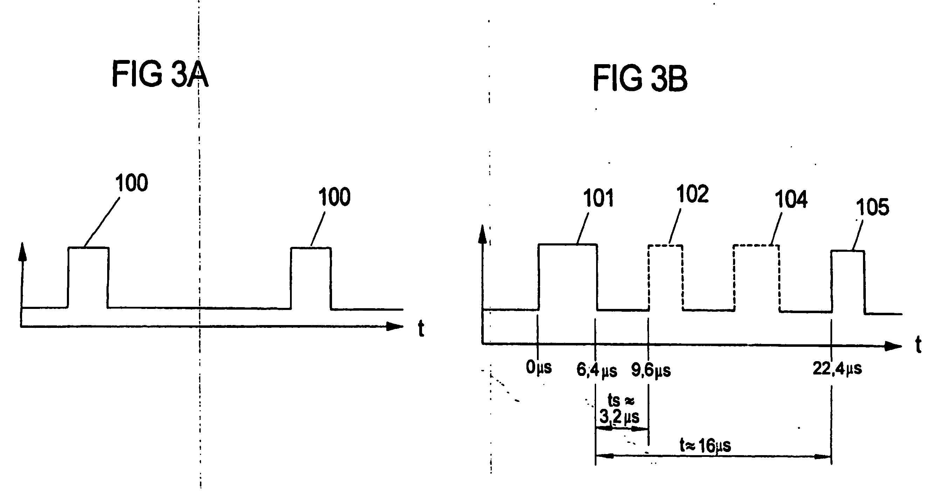

Gemäß Figur 3a werden von dem Tastsystem T, wenn es sich in Betriebsbereitschaft befindet, regelmäßig in einem zeitlichen Abstand von etwa 3 ms Datenpakete 100 an die zugeordnete Empfangseinheit abgesandt. Diese durch IR-Strahlung gebildeten Datenpakete bestehen gemäß Figur 3b aus einer Mehrzahl rechteckförmiger Signalpulse, nämlich einem Startbit 101 und einem Stoppbit 105, zwischen denen noch ein Schaltsignal 102 und ein Batteriesignal 104 angeordnet sein können. Mit anderen Worten ausgedrückt werden im Bereitschaftszustand des Tastsystems regelmäßig Datenpakete 100 ausgesandt, die jeweils ein Startbit 101 und ein Stoppbit 105 aufweisen, wobei zwischen dem Ende des Startbit 101 und dem Beginn des jeweiligen Stoppbit 105 eine definierte Zeitspanne von 16 µs liegt. Wurde durch das Tastsystem eine Auslenkung des Tastelementes festgestellt, so tritt zwischen dem Startbit 101 und dem Stoppbit 105 in einem definierten zeitlichen Abstand von der fallenden Flanke des Startbit (3,2 µs) ein Schaltsignal 102 auf. Darüber hinaus kann zwischen dem Startbit 101 und dem Stoppbit 105 ein Batteriesignal 104 vorgesehen sein, um einen notwendigen Wechsel der Batterie des Tastsystems anzuzeigen.

Das vorstehend anhand der Figuren 1 bis 3b dargestellte Tastsystem mit einem auslenkbaren Tastelement und mit einer zugeordneten Empfangseinheit ist aus dem Stand der Technik bekannt, vergleiche etwa DE 199 29 557 A1.

Nachfolgend wird der Aufbau der Empfangseinheit sowie die Auswertung der Sendesignale des Tastsystems in der Empfangseinheit näher beschrieben, durch die sich die vorliegende Erfindung gegenüber dem Stand der Technik auszeichnet.

Die dem Tastsystem zugeordnete Empfangseinheit umfasst vorliegend als Empfänger eine Fotodiode 1 mit einem nachgeordneten Verstärker 10 sowie ein der Fotodiode 1 nachgeordnetes Differenzierelement 2 mit einem weiteren nachgeordneten Verstärker 20. Dem Differenzierelement 2 und Verstärker 20 sind zwei identische Auswerteschaltungen 3, 3' nachgeordnet, wobei der zweiten Auswerteschaltung 3' noch ein Invertierer 25 vorgeschaltet ist.

Jede der beiden Auswerteschaltungen 3, 3' dient jeweils zum Vergleich des mittels des Differenzierers 2 differenzierten Signals mit einem Referenzsignal in einem Trigger 4 und zur Auswertung solcher Signale, die einen durch das Referenzsignal (in Form einer Referenzspannung) definierten Schwellwert überschreiten in einem Schieberegister 5.

Zur Bildung einer Referenzspannung ausgehend von der Ausgangsspannung des Differenzierers 2 mit nachgeschaltetem Verstärker 20 weist jede der beiden Schaltungen 3, 3' in einem ersten Zweig ein elektrisches Bauelement 30, z.B. in Form einer Diode auf, das nur dann für elektrische Signale durchlässig ist, wenn die eingangsseitige Spannung größer ist als die ausgangsseitige, an einem nachgeschalteten Kondensator 31 abfallende Spannung, der sich wiederum über einen Widerstand 32 entladen kann. Die elektrischen Bauelemente der Kondensatorschaltung 30, 31, 32 sind dabei, insbesondere im Hinblick auf die Abklingzeit des Kondensators, die beispielsweise 15 ms betragen kann, so gewählt, dass die Kondensatorschaltung 30, 31, 32 ihre maximale Wirksamkeit bei Signalen hoher Frequenz erreicht (die zu einem nachgeordneten Verstärker 33 durchgelassen werden). Hierbei handelt es sich vor allem um die Sendesignale des Messtasters. Die Pegel dieser differenzierten Sendesignale sind in der Regel deutlich höher als die Pegel der differenzierten Störsignale.

In einem zweiten Zweig weist die jeweilige Auswerteschaltung 3, 3' ein weiteres elektrisches Bauelement 35 (in Form einer Diode) auf, welches nur dann für elektrische Signale durchlässig ist, wenn die eingangsseitige Spannung größer ist als die ausgangsseitige, an einem nachgeschalteten Kondensator 36 abfallende Spannung, der sich wiederum über einen Widerstand 37 entladen kann. Zwischen jenes elektrische Bauelement 35 und den dem Bauelement 35 nachgeschalteten Kondensator 36 ist ein elektrischer Widerstand 35a geschaltet. Dieser Widerstand 35a ist so gewählt, dass der Kondensator 36 (Abklingzeit z.B. 21 ms) nicht durch die vom Tastsystem erzeugten Datenpakete 100 (vergleiche Figuren 3a und 3b) sondern nur durch solche Störsignale aufladbar ist, die sich im Vergleich zu den Datenpaketen über einen längeren Zeitraum erstrecken bzw. eine kleinere Frequenz aufweisen; d.h. der dem Kondensator 36 vorgeschaltete elektrische Widerstand 35a verursacht eine Verzögerung in der Reaktionszeit der Auswerteschaltung, so dass die sehr kurzen Signalpakete 100, die von dem Tastsystem ausgesandt werden, keine nennenswerte Aufladung des entsprechenden Kondensators 36 bewirken. Der Kondensator wird daher im Wesentlichen nur durch die vergleichsweise niederfrequenteren Störsignale aufgeladen, die beispielsweise durch den Infrarot-Anteil von Leuchtröhren gebildet werden.

Mittels der beiden Kondensatorschaltungen 30, 31, 32 und 35, 35a, 36, 37 erfolgt also eine Auftrennung der differenzierten Empfangssignale in Nutzsignale, die im wesentlichen die differenzierten Sendesignale umfassen, und in die vergleichsweise niederfrequenteren Störsignale. Dabei werden gleichzeitig ein effektiver Wert der Nutzsignale (entsprechend den Spitzen der differenzierten Empfangssignale) und der Störsignale (entsprechend einer Einhüllenden der Störsignale) gebildet, wie nachfolgend noch näher erläutert werden wird.

Den beiden Kondensatorschaltungen 30, 31, 32 und 35, 35a, 36, 37 der jeweiligen Auswerteschaltung 3, 3' ist jeweils ein Verstärker 33 bzw. 38 nachgeschaltet, wobei der erstgenannte Verstärker den Verstärkungsfaktor Eins und der zweitgenannte Verstärker einen Verstärkungsfaktor größer Eins aufweist.

Über die Verstärker 33, 38 sind die beiden Zweige der jeweiligen Auswerteschaltung 3, 3' mit einem Spannungsteiler 39 verbunden, der durch zwei Widerstände gebildet wird. Die von diesem Spannungsteiler abgegriffene Spannung wird dem einen Eingang des jeweiligen Triggers 4 zugeführt, an dessen anderem Eingang jeweils das Ausgangssignal des Differenzierers 2 liegt. Dem Trigger 4 der jeweiligen Auswerteschaltung 3, 3' ist ein Schieberegister 5 nachgeschaltet.

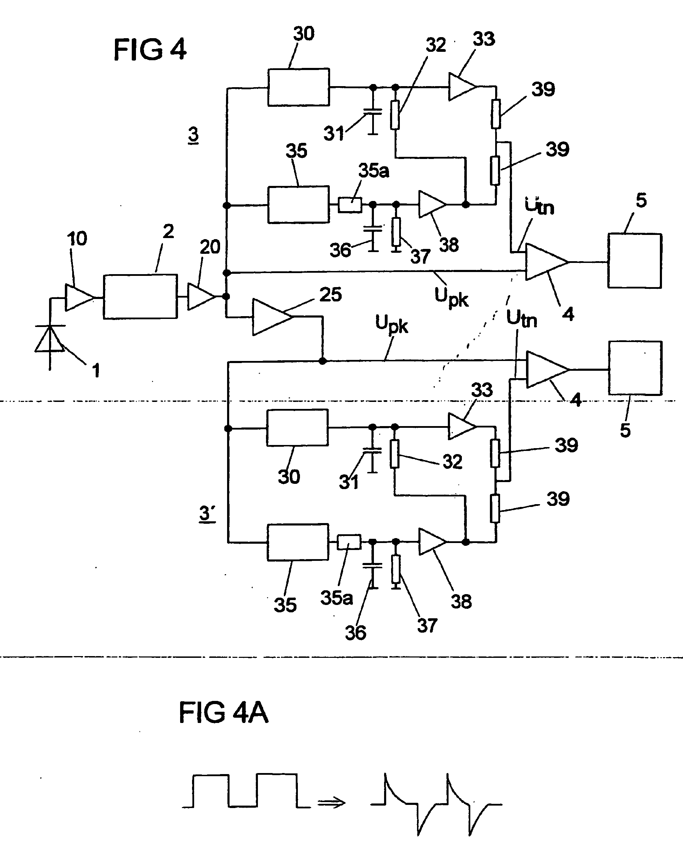

Mittels der anhand Figur 4 erläuterten Schaltungsanordnung erfolgt die Auswertung der Sendesignale des anhand der Figuren 1 bis 3b beschriebenen Tastsystems wie folgt:

Mittels der Fotodiode 3 und dem nachgeordneten Verstärker 10 wird aus den IR-Signalen des Tastsystems sowie den ebenfalls vorhandenen infraroten Störsignalen, die gemeinsam die Empfangssignale der Empfangseinheit E/A bilden, ein elektrisches Signal, nämliche ein Spannungssignal, erzeugt, welches anschließend in dem Differenzierer 2 differenziert wird. Hierdurch werden niederfrequente Störungen eliminiert, die z. B. von Leuchtröhren stammen können. Beim Differenzieren der zunächst im Wesentlichen rechteckförmigen Spannungssignale werden Spannungsspitzen (Spannungsimpulse) an den steigenden und fallenden Flanken der einzelnen Rechtecksignale erzeugt, vergleiche Figur 4a.

Dabei bewirken steigende Flanken einen positiven Spannungsimpuls und fallende Flanken des Sendesignals einen negativen Spannungsimpuls des differenzierten Signales. Die positiven und negativen Spannungsimpulse 3, 3' werden in den beiden dem Differenzierer 2 nachgeordneten Auswerteschaltungen 3, 3' separat ausgewertet, wobei die fallenden Flanken bzw. die entsprechenden Spannungsimpulse des differenzierten Signales der Auswerteschaltung 3' mit dem vorgeschalteten Inventierer 25 zugeordnet sind.

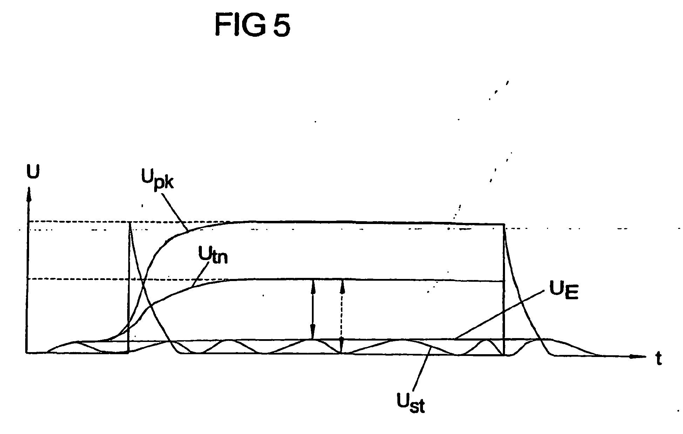

Figur 5 zeigt, wie durch Mittelung der Spitzenwerte Uₚₖ des differenzierten Empfangssignals mit einem effektiven Wert (Einhüllende U_{E}) der Störsignale Uₛₜ ein effektiver Spannungswert Uₜₙ gebildet wird, der als Referenzspannung die Triggerschwelle des Triggers 4 der jeweiligen Auswerteschaltung 3, 3' definiert. Dabei sind in Figur 5 beispielhaft die der steigenden Flanke eines Startbits sowie der steigenden Flanke eines Stoppbits entsprechenden differenzierten Signale dargestellt.

Der Trigger 4 der jeweiligen Auswerteschaltung 3, 3' erkennt diejenigen Signale als Sendesignale, deren Amplitude die durch die Referenzspannung Uₜₙ definierte Triggerschwelle übersteigt. Dadurch, dass die Referenzspannung Uₜₙ durch Verknüpfung der Spitzenwerte der differenzierten Empfangssignale mit einer Einhüllenden der Störsignale gebildet wird, steigt mit zunehmender Amplitude der Störsignale die Triggerschwelle an. Hierdurch wird die Gefahr von Fehlauslösungen des jeweiligen Triggers 4 aufgrund von Störsignalen weitgehend beseitigt. Denn die Triggerschwelle liegt ja oberhalb der Einhüllenden der Störsignale.

Würde demgegenüber, wie aus dem Stand der Technik bekannt, die Triggerschwelle durch Verknüpfung (Mittelwertbildung) der Spitzenwerte der Empfangssignale mit dem Nullpotential gebildet, so wäre die Triggerschwelle unabhängig von den Störsignalen und es bestünde eine erhöhte Gefahr, dass Störsignale zu einer Fehlauslösung der Trigger 4 führen.

Durch die erfindungsgemäß vorgesehene Verknüpfung der Spitzenwerte der (differenzierten) Empfangssignale mit einem effektiven Wert der Störsignale zur Bildung der Triggerschwelle können insbesondere die Störeffekte hochfrequenter Störsignale beseitigt werden. Dies ergänzt die Eliminierung niederfrequenter Störsignale durch das oben beschriebene Differenzieren der Empfangssignale vor deren weiterer Bearbeitung und Auswertung.

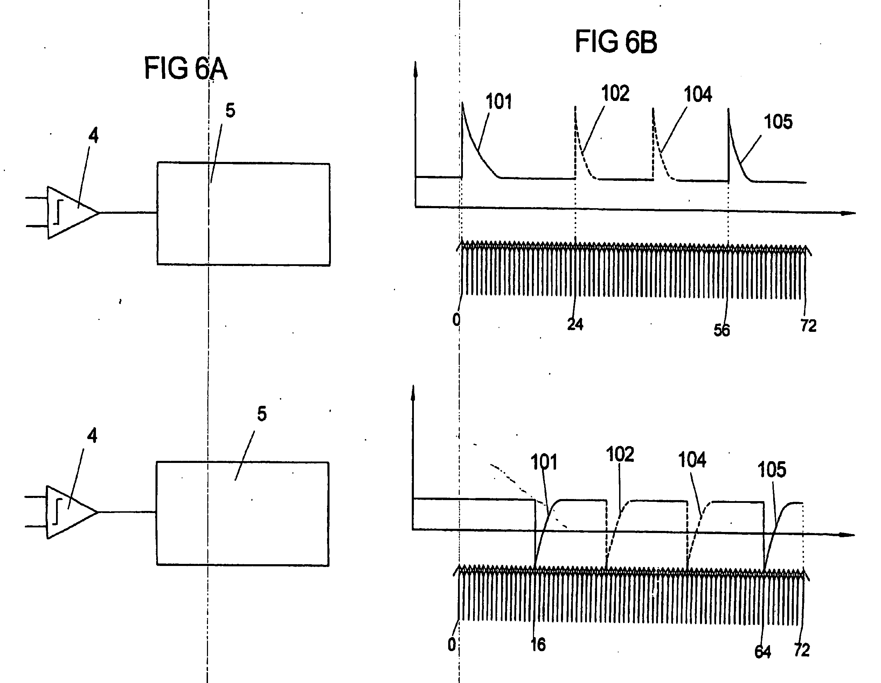

Diejenigen Signale, die vom Trigger 4 der jeweiligen Auswerteschaltung 3, 3' als Flanken der Sendesignale des Tastsystems erkannt worden sind, werden nachfolgend mittels eines Schieberegisters 5 ausgewertet. Dabei ist jeder der beiden Auswerteschaltungen 3, 3' ein eigenes Schieberegister 5 zugeordnet, so dass die von ansteigenden Flanken herrührenden Spannungsimpulse und die von fallenden Flanken herrührenden Spannungsimpulse separat ausgewertet werden. Hierbei geht es darum, festzustellen, ob zwischen einem Startbit und einem Stoppbit eines vom Tastsystem ausgesandten Datenpaketes ein Schaltsignal und/oder ein Batteriesignal auftritt. Weitere Einzelheiten hierzu können den Figuren 6a und 6b entnommen werden.

Figur 6a zeigt schematisch noch einmal die beiden Schieberegister 5 aus Figur 4, die je einem Trigger 4 nachgeordnet und mit einer (nicht im Einzelnen dargestellten) Auswertelogik verknüpft sind.

Figur 6b zeigt schematisch die positiven (oben) und negativen (unten) Spannungsimpulse eines differenzierten Datenpaketes, welche aus den Sendesignalen des Tastsystems gewonnen wurde. Nach dem Differenzieren werden die ansteigenden und fallenden Flanken des Datenpaketes jeweils durch positive oder negative Spannungsimpulse repräsentiert, wie anhand Figur 4a dargestellt.

Zum Einlesen von Daten aus den auszuwertenden Datenpaketen in das jeweilige Schieberegister 5 erfolgt ein sogenanntes achtfaches "Oversampling". D.h., die Abtastfrequenz (1/0,4 µs⁻¹ = 2.500 kHz) des Schieberegisters 5 beträgt das Achtfache der Taktfrequenz (Bit-Rate von 1/3,2 µs⁻¹ = 312,5 kHz) des Sendesignales. Dementsprechend werden für jedes auszuwertende Datenpaket 100, das maximal vier Signalpulse (Startbit, Stoppbit sowie gegebenenfalls ein Schaltsignal und ein Batteriesignal) aufweist, Daten an zweiundsiebzig Abtaststellen eingelesen, vergleiche Figur 6b. Der zeitliche Abstand (0,4 µs) zwischen zwei aufeinander folgenden Einlesevorgängen in das Schieberegister beträgt somit ein Zweiundsiebzigstel der Dauer eines Signalpaketes 100. Hierdurch wird eine entsprechende hohe Genauigkeit bei der Auswertung der Datenpakete erzielt.

Wie anhand der Figuren 6a und 6b erkennbar, dient das eine Schieberegister 5 zur Bestimmung der Lage der steigenden Flanken und das andere Schieberegister 5 zur Bestimmung der Lage der fallenden Flanken der Datenpakete. Diese werden in dem differenzierten Ausgangssignal jeweils durch positive bzw. negative Signalpulse repräsentiert.

Durch Auswertung der Datenpakete mittels der beiden Schieberegister 5 wird zum einen überprüft, ob in dem Schieberegister 5, welches die Lage der ansteigenden Flanken der Datenpakete analysiert, regelmäßig Impulse in einem Abstand von sechsundfünfzig Abtaststellen (entsprechend dem zeitlichen Abstand der steigenden Flanken von Startund Stoppsignal) auftreten. In entsprechender Weise wird mittels des anderen Schieberegisters 5 analysiert, ob dort regelmäßig Impulse in einem Abstand von achtundvierzig Abtaststellen (entsprechend dem zeitlichen Abstand der fallenden Flanken von Start- und Stoppsignal) auftreten - und ob der erste der beiden entsprechenden Impulse (fallende Flanke des Startsignals) in einem Abstand von sechzehn Abtaststellen von Signalbeginn (steigende Flanke des Startsignals) auftritt. Ist dies der Fall, so befindet sich das Tastsystem in Bereitschaft; d. h., es werden regelmäßig Datenpakete ausgesandt, die zumindest ein Startbit und ein Stoppbit enthalten.

Entscheidend ist hierbei, dass auf die Bereitschaft des Tastsystems aus der Lage der Flanken von Signalen geschlossen wird. Es ist unerheblich, ob zusätzlich zu den erwarteten Signalpulsen in einem Abstand von sechsundfünfzig bzw. achtundvierzig Abtaststellen noch einzelne weitere Signalpulse vorhanden sind, die beispielsweise auf Störungen zurückzuführen sein könnten. Es kommt alleine darauf an, dass in einem Abstand von sechsundfünfzig bzw. achtundvierzig Abtaststellen jeweils regelmäßig Signalpulse (entsprechend einer ansteigenden bzw. fallenden Flanke) detektiert werden. Dabei wird für jeden einzelnen Signalpuls jeweils eine Abweichung von plus minus einer Abtaststelle (Berücksichtigung des Jitter) zugelassen.

Indem die Flanken eines eventuellen Schaltsignals 102 bzw. eines eventuellen Batteriesignals 104 jeweils einen definierten Abstand von den entsprechenden Flanken der Start- und Stoppsignale 101, 105 aufweisen, lassen sich dann auch die Existenz eines Schaltsignals 102 bzw. eines Batteriesignals 104 unmittelbar aus der Lage detektierter Pulse des differenzierten Signals ableiten. So ergibt etwa eine Zusammenschau der Figuren 3b und 6b, dass die steigende Flanke eines Schaltsignals vierundzwanzig Abtaststellen von der steigenden Flanke des Startbits des entsprechenden Datenpaketes entfernt ist. Eine entsprechend feste Beziehung gilt hinsichtlich der Lage der fallenden Flanke eines eventuellen Schaltbits bezüglich der fallenden Flanke des Startbits usw.

Somit lässt sich allein durch Auswertung der Lage der Flanken der von dem Tastsystem erzeugten Sendesignale in Form von Datenpaketen feststellen, ob sich das Tastsystem in Bereitschaft befindet sowie ob ein Schaltsignal (entsprechend einer Auslenkung des Tastelementes) und/oder ein Batteriesignal (entsprechend einem erforderlichen Batteriewechsel) vorliegt.

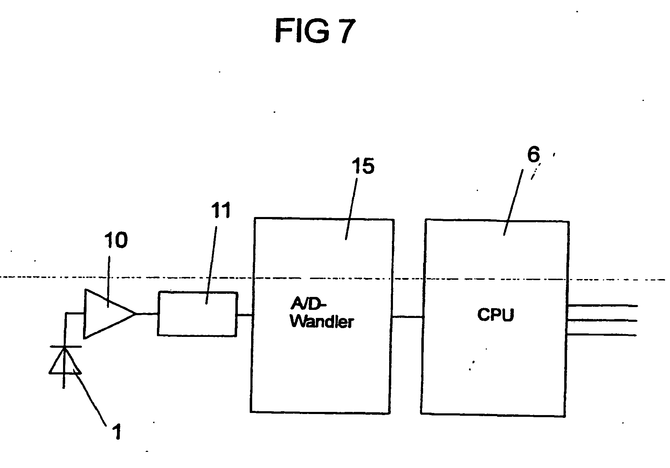

Figur 7 zeigt im Unterschied zu der analogen Schaltungsanordnung aus Figur 4 eine digitale Ausführung einer Anordnung zur Auswertung der Sendesignale eines Tastsystems, die Bestandteil einer entsprechenden Empfangseinheit sein kann. Diese Anordnung umfasst eine Fotodiode 1 mit nachgeschaltetem Verstärker 10, Filter 11 und Analog-/Digitalwandler 15. Dem Analog-/Digitalwandler 15 ist wiederum ein Mikroprozessor oder programmierbarer Logikbaustein 6 nachgeordnet, der nach Wandlung des von der Fotodiode 1 und dem Verstärker 10 erzeugten Spannungssignals in digitale Signale mittels des Analog-/Digitalwandlers 15 die gesamte Aufarbeitung und Auswertung der Signale übernimmt. Sämtliche vorstehend anhand der Figuren 4 bis 6 beschriebenen Verfahrensschritte, insbesondere das Differenzieren der Empfangssignale, die Unterscheidung der Sendesignale des Tastsystems von Störsignalen (durch Vergleich der Empfangssignale mit einem Referenzwert, gebildet aus den differenzierten Empfangssignalen und einem Effektivwert der Störsignale) sowie die abschließende Bestimmung der Lage der Flanken der einzelnen Impulse des Sendesignals erfolgt hierbei mittels des Mikroprozessors bzw. programmierbaren Logikbausteines 6.

## Patentansprüche

1. Verfahren zur Auswertung von Sendesignalen eines Tastsystems (T), das ein aus einer Ruheposition auslenkbares Tastelement (E) aufweist und das Sendesignale erzeugt, die während einer Auslenkung des Tastelementes (E) aus seiner Ruheposition ein Schaltsignal umfassen und die von dem Tastsystem (T) als elektromagnetische Signale ausgesandt werden und die gemeinsam mit Störsignalen von einer Empfangseinheit (E/A) empfangen werden, in der die aus den Sendesignalen und den Störsignalen bestehenden Empfangssignale mit einem Referenzsignal verglichen werden,
**dadurch gekennzeichnet,**
**dass** zur Unterscheidung der Sendesignale von Störsignalen die Empfangssignale vor dem Vergleich mit dem Referenzsignal nach der Zeit differenziert werden und die differenzierten Empfangssignale nach dem Vergleich mit dem Referenzsignal an einer Vielzahl zeitlich hintereinander angeordneter Abtaststellen ausgewertet werden, um die Lage der Flanken der Empfangssignale zu ermitteln.

2. Verfahren nach Anspruch 1, **dadurch gekennzeichnet, dass** die Sendesignale durch Signalpulse gebildet werden, die vorzugsweise im Wesentlichen rechteckförmig sind.

3. Verfahren nach einem der vorhergehenden Ansprüche, **dadurch gekennzeichnet, dass** die Sendesignale durch eine Folge von Signalpaketen (100) gebildet werden, wobei jedes Signalpaket (100) ein Startsignal und ein Stoppsignal aufweist und wobei während einer Auslenkung des Tastelementes (E) aus seiner Ruheposition zwischen dem Start- und dem Stoppsignal ein Schaltsignal vorliegt.

4. Verfahren nach einem der vorhergehenden Ansprüche, **dadurch gekennzeichnet, dass** die Empfangssignale zur Ermittlung der Lage der Signalflanken differenziert werden und dass sowohl die Signalflanken mit positiver Steigung als auch die Signalflanken mit negativer Steigung jeweils durch Vergleich mit einem Referenzwert ausgewertet werden.

5. Verfahren nach Anspruch 4, **dadurch gekennzeichnet, dass** durch Bestimmung der zeitlichen Lage steigender und fallender Signalflanken der Empfangssignale das Auftreten der Start- und Stoppsignale festgestellt wird.

6. Verfahren nach einem der vorhergehenden Ansprüche, **dadurch gekennzeichnet, dass** die Sendesignale von dem Tastsystem (T) als Infrarotsignale, ausgesandt werden.

7. Verfahren nach einem der vorhergehenden Ansprüche, **dadurch gekennzeichnet, dass** die Empfangssignale vor dem Differenzieren in elektrische Signale, insbesondere Spannungssignale, umgesetzt werden.

8. Verfahren nach einem der vorhergehenden Ansprüche, **dadurch gekennzeichnet, dass** das Referenzsignal aus den Empfangssignalen gebildet wird.

9. Verfahren nach Anspruch 6 oder 7 und Anspruch 8, **dadurch gekennzeichnet, dass** das Referenzsignal ein elektrisches Signal, insbesondere eine Referenzspannung, ist.

10. Verfahren nach Anspruch 8 oder 9, **dadurch gekennzeichnet, dass** das Referenzsignal aus den differenzierten Empfangssignalen unter Verknüpfung mit den die Sendesignale überlagernden Störsignalen gebildet wird.

11. Verfahren nach Anspruch 10, **dadurch gekennzeichnet, dass** die differenzierten Empfangssignale mit einem effektiven Wert der Störsignale verknüpft werden.

12. Verfahren Anspruch 10 oder 11, **dadurch gekennzeichnet, dass** zur Verknüpfung der differenzierten Empfangssignale mit den Störsignalen ein effektiver Wert von aus den differenzierten Empfangssignalen generierten Nutzsignalen gebildet wird, wobei die Nutzsignale insbesondere die aus den differenzierten Sendesignalen bestehenden Anteile der differenzierten Empfangssignale umfassen.

13. Verfahren nach Anspruch 11 und 12, **dadurch gekennzeichnet, dass** der effektive Wert der Störsignale mittels einer Kondensatorschaltung (35a, 36, 37, 38) gebildet wird und/oder der effektive Wert der Nutzsignale mittels einer Kondensatorschaltung (30, 31, 32, 33) gebildet wird.

14. Verfahren nach einem der Ansprüche 10 bis 13, **dadurch gekennzeichnet, dass** die Verknüpfung zwischen den differenzierten Empfangssignalen und den Störsignalen zur Erzeugung des Referenzsignales durch Mittelwertbildung erfolgt.

15. Verfahren nach Anspruch 14, **dadurch gekennzeichnet, dass** die Mittelwertbildung mittels eines Spannungsteilers (39) durchgeführt wird.

16. Verfahren nach einem der Ansprüche 8 bis 11, 13 oder 15, **dadurch gekennzeichnet, dass** das Referenzsignal mittels einer digitalen Schaltung, insbesondere unter Verwendung eines programmierbaren Logikbausteines (L, 6) oder Mikroprozessors (6), gebildet wird.

17. Verfahren nach einem der vorhergehenden Ansprüche, **dadurch gekennzeichnet, dass** solche differenzierten Empfangssignale weiter ausgewertet werden, die eine durch das Referenzsignal vorgegebene Signalschwelle überschreiten.

18. Verfahren nach einem der vorhergehenden Ansprüche, **dadurch gekennzeichnet, dass** die Abtaststellen durch ein periodisches Abtastsignal definiert werden, dessen Frequenz um ein Vielfaches größer ist als die Signalrate der Sendesignale.

19. Verfahren nach Anspruch 1, **dadurch gekennzeichnet, dass** zur Auswertung der differenzierten Empfangssignale an einer Vielzahl Abtaststellen ein Halbleiterspeicher, insbesondere in Form eines Schieberegisters, oder eine digitale Schaltung, insbesondere in Form eines Mikroprozessors oder eines programmierbaren Logikbausteines (L, 6), verwendet wird.

20. Verfahren nach Anspruch 3 oder 5, **dadurch gekennzeichnet, dass** aus dem regelmäßigen Auftreten von Start- und Stoppsignalen auf die Bereitschaft des Tastsystems (T) geschlossen wird.

21. Verfahren nach einem der vorhergehenden Ansprüche, **dadurch gekennzeichnet, dass** aus dem Auftreten eines Signals an einer vorgegebenen Stelle zwischen Start- und Stoppsignal auf eine Auslenkung des Tastelementes (E) geschlossen wird.

22. Verfahren nach einem der vorhergehenden Ansprüche, **dadurch gekennzeichnet, dass** nach dem Differenzieren der Empfangssignale die fallenden und steigenden Signalflanken der Empfangssignale in separaten elektrischen Schaltungen (3, 3') bearbeitet und ausgewertet werden.

23. Anordnung zur Auswertung von Empfangssignalen in einem Tastsystem (T), das einen Messtaster und eine Empfangseinheit (E/A) umfasst, wobei der Messtaster ein aus einer Ruheposition auslenkbares Tastelement (E) aufweist und in Abhängigkeit von der Auslenkung des Tastelementes (E) Sendesignale erzeugt und wobei die Empfangseinheit (E/A) zum Empfang elektromagnetischer Empfangssignale des Messtasters ausgebildet ist und Mittel zum Empfang der Empfangssignale, die aus den Sendesignalen und Störsignalen bestehen, und Mittel (1, 10) zur Umwandlung der elektromagnetischen Empfangssignale in elektrische Signale sowie Mittel zum Vergleich der Empfangssignale mit einem Referenzsignal aufweist,
**dadurch gekennzeichnet,**
**dass** den Mitteln (4) zum Vergleich der Empfangssignale mit einem Referenzsignal ein Differenzierer (2) vorgeschaltet ist, mit dem die Empfangssignale nach der Zeit differenzierbar sind und dass Mittel (5), mit denen die differenzierten Empfangssignale an einer Vielzahl zeitlich hintereinander angeordneter Abtaststellen ausgewertet werden können, und zur Bestimmung der Lage der Flanken der Empfangssignale vorgesehen sind, die den Mitteln (4) zum Vergleich der Empfangssignale mit dem Referenzsignal nachgeordnet sind.

24. Anordnung nach Anspruch 23, **dadurch gekennzeichnet, dass** die Empfangseinheit (E/A) zum Empfang elektromagnetischer Empfangssignale, in Form von Infrarotsignalen, des Messtasters ausgebildet ist und Mittel (1, 10) zur Umwandlung der elektromagnetischen Empfangssignale in elektrische Signale, in Form eines optoelektronischen Bauelementes, aufweist.

25. Anordnung nach Anspruch 24, **dadurch gekennzeichnet, dass** den Mitteln (1, 10) zur Umwandlung der elektromagnetischen Empfangssignale in elektrische Signale eine analoge Schaltung (3, 3') zur Bearbeitung und Auswertung der Empfangssignale nachgeschaltet ist.

26. Anordnung nach Anspruch 24, **dadurch gekennzeichnet, dass** den Mitteln (1, 10) zur Umwandlung der elektromagnetischen Empfangssignale in elektrische Signale eine digitale Schaltung, insbesondere ein programmierbarer Logikbaustein oder Mikroprozessor (6), zur Bearbeitung und Auswertung der Empfangssignale nachgeschaltet ist.

27. Anordnung nach einem der Ansprüche 23 bis 26, **dadurch gekennzeichnet, dass** Mittel (39) vorgesehen sind, um zur Bildung des Referenzsignals die differenzierten Empfangssignale mit Störsignalen zu verknüpfen, die die Empfangssignale überlagern.

28. Anordnung nach Anspruch 27, **dadurch gekennzeichnet, dass** die Verknüpfung durch Mittelwertbildung erfolgt.

29. Anordnung nach Anspruch 28, **dadurch gekennzeichnet, dass** die Mittel (5) zur Bestimmung der Lage der Flanken ein Schieberegister, einen Mikroprozessor oder einen programmierbaren Logikbaustein umfassen.

## Claims

1. Method for evaluating transmission signals from a probe system (T) which has a probe element (E), which can be deflected from a rest position, and generates transmission signals which comprise a switching signal during deflection of the probe element (E) from its rest position and are emitted by the probe system (T) as electromagnetic signals and are received, together with interference signals, by a receiving unit (E/A) in which the reception signals consisting of the transmission signals and the interference signals are compared with a reference signal,
**characterized**
**in that**, in order to distinguish the transmission signals from interference signals, the reception signals are differentiated with respect to time before being compared with the reference signal and the differentiated reception signals are evaluated at a multiplicity of sampling points arranged in temporal succession after being compared with the reference signal in order to determine the position of the edges of the reception signals.

2. Method according to Claim 1, **characterized in that** the transmission signals are formed by signal pulses which preferably have a substantially square-wave form.

3. Method according to one of the preceding claims, **characterized in that** the transmission signals are formed by a sequence of signal packets (100), each signal packet (100) having a start signal and a stop signal and a switching signal being present between the start signal and the stop signal during deflection of the probe element (E) from its rest position.

4. Method according to one of the preceding claims, **characterized in that** the reception signals are differentiated in order to determine the position of the signal edges, and **in that** both the signal edges with a positive gradient and the signal edges with a negative gradient are each evaluated by comparison with a reference value.

5. Method according to Claim 4, **characterized in that** the occurrence of the start and stop signals is determined by determining the temporal position of rising and falling signal edges of the reception signals.

6. Method according to one of the preceding claims, **characterized in that** the transmission signals are emitted by the probe system (T) as infrared signals.

7. Method according to one of the preceding claims, **characterized in that** the reception signals are converted into electrical signals, in particular voltage signals, before differentiation.

8. Method according to one of the preceding claims, **characterized in that** the reference signal is formed from the reception signals.

9. Method according to Claim 6 or 7 and Claim 8, **characterized in that** the reference signal is an electrical signal, in particular a reference voltage.

10. Method according to Claim 8 or 9, **characterized in that** the reference signal is formed from the differentiated reception signals by linking to the interference signals which are superimposed on the transmission signals.

11. Method according to Claim 10, **characterized in that** the differentiated reception signals are linked to an effective value of the interference signals.

12. Method according to Claim 10 or 11, **characterized in that**, in order to link the differentiated reception signals to the interference signals, an effective value of useful signals generated from the differentiated reception signals is formed, the useful signals comprising, in particular, those components of the differentiated reception signals which consist of the differentiated transmission signals.

13. Method according to Claims 11 and 12, **characterized in that** the effective value of the interference signals is formed by means of a capacitor circuit (35a, 36, 37, 38) and/or the effective value of the useful signals is formed by means of a capacitor circuit (30, 31, 32, 33).

14. Method according to one of Claims 10 to 13, **characterized in that** the link between the differentiated reception signals and the interference signals in order to generate the reference signal is effected by means of averaging.

15. Method according to Claim 14, **characterized in that** the averaging is carried out by means of a voltage divider (39).

16. Method according to one of Claims 8 to 11, 13 or 15, **characterized in that** the reference signal is formed by means of a digital circuit, in particular using a programmable logic module (L, 6) or microprocessor (6).

17. Method according to one of the preceding claims, **characterized in that** those differentiated reception signals which exceed a signal threshold predefined by the reference signal are evaluated further.

18. Method according to one of the preceding claims, **characterized in that** the sampling points are defined by a periodic sampling signal, the frequency of which is a multiple greater than the signal rate of the transmission signals.

19. Method according to Claim 1, **characterized in that** a semiconductor memory, in particular in the form of a shift register, or a digital circuit, in particular in the form of a microprocessor or a programmable logic module (L, 6), is used to evaluate the differentiated reception signals at a multiplicity of sampling points.

20. Method according to Claim 3 or 5, **characterized in that** the readiness of the probe system (T) is inferred from the regular occurrence of start and stop signals.

21. Method according to one of the preceding claims, **characterized in that** deflection of the probe element (E) is inferred from the occurrence of a signal at a predefined point between the start and stop signals.

22. Method according to one of the preceding claims, **characterized in that**, after the reception signals have been differentiated, the falling and rising signal edges of the reception signals are processed and evaluated in separate electrical circuits (3, 3').

23. Arrangement for evaluating reception signals in a probe system (T) which comprises a measuring probe and a receiving unit (E/A), the measuring probe having a probe element (E), which can be deflected from a rest position, and generating transmission signals on the basis of the deflection of the probe element (E), and the receiving unit (E/A) being designed to receive electromagnetic reception signals from the measuring probe and having means for receiving the reception signals consisting of the transmission signals and interference signals and means (1, 10) for converting the electromagnetic reception signals into electrical signals and means for comparing the reception signals with a reference signal, **characterized**
**in that** a differentiator (2) is connected upstream of the means (4) for comparing the reception signals with a reference signal and can be used to differentiate the reception signals with respect to time, and in that means (5) which can be used to evaluate the differentiated reception signals at a multiplicity of sampling points arranged in temporal succession and are intended to determine the position of the edges of the reception signals are provided and are arranged downstream of the means (4) for comparing the reception signals with the reference signal.

24. Arrangement according to Claim 23, **characterized in that** the receiving unit (E/A) is designed to receive electromagnetic reception signals in the form of infrared signals from the measuring probe and has means (1, 10) for converting the electromagnetic reception signals into electrical signals in the form of an optoelectronic component.

25. Arrangement according to Claim 24, **characterized in that** an analogue circuit (3, 3') for processing and evaluating the reception signals is connected downstream of the means (1, 10) for converting the electromagnetic reception signals into electrical signals.

26. Arrangement according to Claim 24, **characterized in that** a digital circuit, in particular a programmable logic module or microprocessor (6), for processing and evaluating the reception signals is connected downstream of the means (1, 10) for converting the electromagnetic reception signals into electrical signals.

27. Arrangement according to one of Claims 23 to 26, **characterized in that**, for the purpose of forming the reference signal, means (39) are provided in order to link the differentiated reception signals to interference signals which are superimposed on the reception signals.

28. Arrangement according to Claim 27, **characterized in that** the linking is effected by means of averaging.

29. Arrangement according to Claim 28, **characterized in that** the means (5) for determining the position of the edges comprise a shift register, a microprocessor or a programmable logic module.

## Revendications

1. Procédé d'évaluation de signaux d'émission d'un système de détection (T) qui comprend un élément de détection (E) pouvant être dévié d'une position de repos et générant des signaux d'émission qui comprennent un signal de commutation pendant une déviation de l'élément de détection (E) par rapport à sa position de repos et qui sont délivrés par le système de détection (T) sous la forme de signaux électromagnétiques et qui sont reçus en même temps que des signaux parasites par une unité de réception (E/A) dans laquelle les signaux de réception constitués des signaux d'émission et des signaux parasites sont comparés à un signal de référence, **caractérisé en ce que**
pour distinguer les signaux d'émission des signaux parasites, les signaux de réception sont différentiés par rapport au temps avant la comparaison des signaux de réception au signal de référence et les signaux de réception différenciés, après comparaison au signal de référence, sont évalués en une pluralité de points de détection disposés consécutivement dans le temps afin de déterminer la position des fronts des signaux de réception.

2. Procédé selon la revendication 1, **caractérisé en ce que** les signaux d'émission sont formés de signaux impulsionnels qui sont de préférence sensiblement rectangulaires.

3. Procédé selon l'une quelconque des revendications précédentes, **caractérisé en ce que** les signaux d'émission sont constitués d'une séquence de paquets de signaux (100), chaque paquet de signal (100) comprenant un signal de départ et un signal d'arrêt et dans lequel un signal de commutation est présent pendant une déviation de l'élément de détection (E) par rapport à sa position de repos entre les signaux de départ et d'arrêt.

4. Procédé selon l'une quelconque des revendications précédentes, **caractérisé en ce que** les signaux de réception sont différentiés pour déterminer la position des fronts de signaux et **en ce que** les fronts de signaux ayant une pente positive ainsi que les fronts de signaux ayant une pente négative sont respectivement évalués par comparaison à une valeur de référence.

5. Procédé selon la revendication 4, **caractérisé en ce que** l'apparition des signaux de départ et d'arrêt est déterminée pour déterminer la position temporelle de fronts de signaux montants et descendants des signaux de réception.

6. Procédé selon l'une quelconque des revendications précédentes, **caractérisé en ce que** les signaux d'émission sont émis par le système de détection (T) sous la forme de signaux infrarouges.

7. Procédé selon l'une quelconque des revendications précédentes, **caractérisé en ce que** les signaux de réception sont convertis en signaux électriques, notamment en signaux de tension, avant la différentiation.

8. Procédé selon l'une quelconque des revendications précédentes, **caractérisé en ce que** le signal de référence est formé à partir des signaux de réception.

9. Procédé selon la revendication 6 ou 7 et la revendication 8, **caractérisé en ce que** le signal de référence est un signal électrique, notamment une tension de référence.

10. Procédé selon la revendication 8 ou 9, **caractérisé en ce que** le signal de référence est formé à partir des signaux de réception différentiés de manière combinée aux signaux parasites superposés aux signaux d'émission.

11. Procédé selon la revendication 10, **caractérisé en ce que** les signaux de réception différentiés sont combinés à une valeur efficace des signaux parasites.

12. Procédé selon la revendication 10 ou 11, **caractérisé en ce que**, pour comparer les signaux de réception différentiés aux signaux parasites, une valeur efficace de signaux utiles générés à partir des signaux de réception différentiés est formée, les signaux utiles comprenant notamment la partie des signaux de réception différentiés qui est constituée des signaux d'émission différentiés.

13. Procédé selon la revendication 11 ou 12, **caractérisé en ce que** la valeur efficace des signaux parasites est formée au moyen d'un circuit à condensateur (35a, 36, 37, 38) et/ou **en ce que** la valeur efficace des signaux utiles est formée au moyen d'un circuit à condensateur (30, 31, 32, 33).

14. Procédé selon l'une quelconque des revendications 10 à 13, **caractérisé en ce que** la combinaison entre les signaux de réception différentiés et les signaux parasites pour générer le signal de référence s'effectue par un calcul de la moyenne.

15. Procédé selon la revendication 14, **caractérisé en ce que** le calcul de la moyenne est effectué au moyen d'un diviseur de tension (39).

16. Procédé selon l'une quelconque des revendications 8 à 11, 13 ou 15, **caractérisé en ce que** le signal de référence est formé au moyen d'un circuit numérique, notamment par utilisation de composants logiques programmables (L, 6) ou d'un microprocesseur (6).

17. Procédé selon l'une quelconque des revendications précédentes, **caractérisé en ce que** les signaux de réception différentiés qui dépassent un seuil de signal prédéterminé par le signal de référence sont en outre évalués.

18. Procédé selon l'une quelconque des revendications précédentes, **caractérisé en ce que** les points de détection sont définis par un signal de détection périodique dont la fréquence est supérieure d'un certain multiple à la fréquence de répétition des signaux d'émission.

19. Procédé selon la revendication 1, **caractérisé en ce que** pour évaluer les signaux de réception différentiés en une pluralité de points de détection, on utilise une mémoire à semi-conducteur, notamment sous la forme d'un registre à décalage, ou un circuit numérique, notamment sous la forme d'un microprocesseur ou d'un composant logique programmable (L, 6).

20. Procédé selon la revendication 3 ou 5, **caractérisé en ce que** l'état de préparation du système de détection (T) est déterminé à partir de l'apparition périodique de signaux de départ et d'arrêt.

21. Procédé selon l'une quelconque des revendications précédentes, **caractérisé en ce qu'**une déviation de l'élément de détection (E) est déterminée à partir de l'apparition d'un signal en un point prédéterminé entre les signaux de départ et d'arrêt.

22. Procédé selon l'une quelconque des revendications précédentes, **caractérisé en ce que**, après la différentiation des signaux de réception, les fronts descendants et montants des signaux de réception sont traités et évalués dans des circuits électriques séparés (3, 3' ) .

23. Dispositif d'évaluation de signaux de réception dans un système de détection (T) qui comprend un détecteur de mesure et une unité de réception (E/A), dans lequel le détecteur de mesure comprend un élément de détection (E) pouvant être dévié par rapport à une position de repos et générant des signaux d'émission en fonction de la déviation de l'élément de détection (E) et dans lequel l'unité de réception (E/A) est conçue pour recevoir des signaux de réception électromagnétiques du détecteur de mesure et comprend des moyens destinés à recevoir les signaux de réception qui sont constitués des signaux d'émission et de signaux parasites, et des moyens (1, 10) destinés à convertir les signaux de réception électromagnétiques en des signaux électriques ainsi que des moyens destinés à comparer les signaux de réception à un signal de référence, **caractérisé**
**en ce qu'**un différentiateur (2) au moyen duquel les signaux de réception peuvent être différentiés par rapport au temps est connecté en amont des moyens (4) destinés à comparer les signaux de réception à un signal de référence et en ce qu'il est prévu des moyens (5) à l'aide desquels les signaux de réception différentiés peuvent être évalués en une pluralité de points de détection disposés consécutivement dans le temps pour déterminer la position des fronts des signaux de réception, et qui sont disposés en aval des moyens (4) destinés à comparer les signaux de réception au signal de référence.

24. Dispositif selon la revendication 23, **caractérisé en ce que** l'unité de réception (E/A) est conçue pour recevoir des signaux de réception électromagnétiques sous la forme de signaux infrarouges du détecteur de mesure et comprend des moyens (1, 10) destinés à convertir les signaux de réception électromagnétiques en signaux électriques, sous la forme d'un composant optoélectronique.

25. Dispositif selon la revendication 24, **caractérisé en ce qu'**un circuit analogique (3, 3') destiné à traiter et évaluer les signaux de réception est connecté en aval des moyens (1, 10) destinés à convertir les signaux de réception électromagnétiques en signaux électriques.

26. Dispositif selon la revendication 24, **caractérisé en ce qu'**un circuit numérique, notamment un composant logique programmable ou un microprocesseur (6) destiné à traiter et à évaluer les signaux de réception est connecté en aval des moyens (1, 10) destinés à convertir les signaux de réception électromagnétiques en signaux électriques.

27. Dispositif selon l'une quelconque des revendications 23 à 26, **caractérisé en ce qu'**il est prévu des moyens (39) destinés à combiner les signaux de réception différentiés à des signaux parasites qui sont superposés aux signaux de réception pour former le signal de référence.

28. Dispositif selon la revendication 27, **caractérisé en ce que** la combinaison s'effectue par un calcul de la moyenne.

29. Dispositif selon la revendication 28, **caractérisé en ce que** les moyens (5) destinés à déterminer la position des fronts comprennent un registre à décalage, un microprocesseur ou un composant logique programmable.
